Europäisches Patentamt

European Patent Office

Office européen des brevets

(19)

(11) Numéro de publication : **0 308 302 B1**

(12) **FASCICULE DE BREVET EUROPEEN**

(45) Date de publication du fascicule du brevet :
22.07.92 Bulletin 92/30

(51) Int. Cl.⁵ : **B01J 29/18, C07C 2/12**

(21) Numéro de dépôt : **88402269.0**

(22) Date de dépôt : **08.09.88**

(54) **Procédé de production d'oligomères d'oléfines, utilisant un catalyseur à base de mordénite modifiée.**

(30) Priorité : **17.09.87 FR 8712932**

(43) Date de publication de la demande :
**22.03.89 Bulletin 89/12**

(45) Mention de la délivrance du brevet :
**22.07.92 Bulletin 92/30**

(84) Etats contractants désignés :
**BE DE ES GB GR IT NL**

(56) Documents cités :
**EP-A- 0 090 569
EP-A- 0 084 748
FR-A- 2 477 903
US-A- 3 591 488
US-A- 3 597 155
US-A- 4 417 086**

(73) Titulaire : **INSTITUT FRANCAIS DU PETROLE
4, Avenue de Bois Préau
F-92502 Rueil-Malmaison (FR)**

(72) Inventeur : **Juguin, Bernard
46, avenue du Stade
F-92500 Rueil Malmaison (FR)**
Inventeur : **Raatz, Francis
17, rue Michelet
F-92500 Rueil Malmaison (FR)**
Inventeur : **Travers, Christine
12, Bd du Général De Gaulle
F-92500 Rueil Malmaison (FR)**
Inventeur : **Martino, Germain
Batiment Condé 80, avenue F. Lefebvre
F-78300 Poissy (FR)**

EP 0 308 302 B1

Jouve, 18, rue Saint-Denis, 75001 PARIS

## Description

La présente invention concerne un procédé de production d'oligomères d'oléfines. Il permet, par exemple, la production de supercarburant, de carburéacteur et de gazole automobile, à partir d'oléfines légères $C_2$ à $C_8$.

Les oléfines de départ peuvent provenir de toute source convenable. Elles peuvent, aussi, être produites par conversion du méthanol.

Le procédé selon l'invention est adapté, en particulier, pour les raffineurs et/ou les pétrochimistes disposant ou pouvant disposer d'un approvisionnement en méthanol d'une part, et, d'autre part, d'une ou de plusieurs unités de production d'oléfines légères $C_2$ à $C_8$, comme par exemple des unités de craquage catalytique, de vapocraquage ou de déshydrogénation catalytique.

Le procédé selon l'invention permet, en particulier, d'obtenir :

1) du supercarburant de bonne qualité,

2) du combustible pour carburéacteur d'excellente qualité,

3) du gazole pour moteur diesel de très bonne qualité.

Le procédé selon l'invention est applicable notamment dans les cas suivants :

a) la charge fraîche est constituée uniquement de méthanol qui, en premier lieu, est envoyée dans une zone de décomposition catalytique où elle est transformée en eau et en oléfines légères constituées principalement de propène, puis, en second lieu, après séparation de l'eau formée, les oléfines légères sont envoyées dans une zone d'oligomérisation où elles sont transformées en un mélange de supercarburant et de bases pour carburéacteur et moteur diesel.

b) la charge fraîche est constituée uniquement d'oléfines légères $C_2$ à $C_8$ issues soit d'une unité de craquage catalytique, soit d'une unité de vapocraquage, soit d'une unité de déshydrogénation catalytique, soit de toutes autres sources d'approvisionnement ; cette charge fraîche est alors envoyée directement dans la section d'oligomérisation où elle est transformée en un mélange de supercarburant et de bases pour carburéacteur et moteur diesel.

c) la charge fraîche est constituée par un mélange des deux charges précédentes.

Dans la zone dite de décomposition catalytique, la transformation du méthanol en eau et en oléfines légères est effectuée en phase vapeur en présence d'un catalyseur zéolitique acide opérant soit en lit fixe, soit de préférence en système catalytique fluidisé, à un température d'environ 450 à 650 °C (de préférence entre 530 et 590 °C), sous une pression de 0,01 à 1 MPa (de préférence de 0,05 à 0,5 MPa), avec un débit de charge liquide (vitesse spatiale) d'environ 5 à 100 volumes par volume de catalyseur et par heure, la charge pouvant être composée soit par du méthanol pur, soit par un mélange en toute proportion de vapeur d'eau et de méthanol.

La réaction dite d'oligomérisation est effectuée en phase liquide, en phase supercritique ou en phase gazeuse, en présence d'un catalyseur zéolitique acide disposé sous forme d'un lit fixe, à une température d'environ 50 à 400 °C (de préférence entre 150 et 300 °C), sous une pression de 2 à 10 MPa (de préférence entre 3 et 7 MPa), avec un débit d'hydrocarbures liquides (vitesse spatiale) d'environ 0,3 à 4 volumes par volume de catalyseur et par heure.

Les catalyseurs utilisés pour les réactions de conversion du méthanol en oléfines et d'oligomérisation des oléfines légères sont constituées de mordénites forme H modifiées. Cependant, les caractéristiques des phases catalytiques sont optimisées pour chaque type de réaction.

Pour la réaction de transformation du méthanol en oléfines légères, on peut utiliser les systèmes catalytiques connus dans l'art antérieur, et décrits en détail dans les brevets EP 0084748 et US 4,447,669. La mordénite forme H a, dans ce cas, un rapport Si/Al supérieur à 80 et, de préférence, compris entre 100 et 150. Ces rapports Si/Al élevés sont obtenus par une procédure de désalumination faisant appel à une alternance de calcinations sous vapeur d'eau et de traitements acides. Les teneurs en vapeur d'eau retenues pour les calcinations sont inférieures à 60 %, les températures de traitement étant comprises entre 550 et 680 °C. Les attaques acides sont conduites dans des solutions acides concentrées entre 2 et 9 N. Il est à noter que l'utilisation de mordénite désaluminée est préférable à celle de zéolites du type MFI préconisées par la société MOBIL OIL ("méthanol conversion to light olefins" par Clarence D. CHANG, Catal. Rev. Sci. Eng. 26 (3 and 4) 323-345, 1984), car la mordénite conduit à des rendements en propylène et butènes supérieurs. Le faible taux d'éthylène obtenu avec la mordénite est un point important, car cela permet d'augmenter les rendements en gazole et carburéacteur au cours de la deuxième étape d'oligomérisation des oléfines.

L'utilisation de zéolites sous forme H pour la réaction d'oligomérisation des oléfines légères $C_2$ à $C_8$ a déjà été proposée par de nombreux auteurs (US 4,487,985 - US 4,513,156 - US 4,417,086 - US 4,414,423 - US 4,417,088 - US 4,414,423 - US 4,423,268 - M. OCCELLI, J. HSU et L. GALYA in J. Mol. Catal. 32, 1985, 377). D'après l'art antérieur, les zéolites susceptibles d'être performantes pour cette réaction d'oligomérisation doi-

EP 0 308 302 B1

vent répondre à des critères très stricts. Deux critères principaux ont été définis : l'indice de contrainte (CI = constraint index) de la société MOBIL OIL, et l'indice de transfert d'hydrogène (HTI = hydrogen transfer index) de la société CHEVRON.

L'indice de contrainte CI permet normalement de caractériser les propriétés de sélectivité géométrique des zéolites. Il est défini en détail dans le document US 4,324,940 ; c'est, en fait, une mesure approchée de la vitesse de craquage relative du n-hexane et du 3-méthylpentane. En utilisant le CI comme critère de sélection des zéolites pouvant présenter des propriétés intéressantes en oligomérisation des oléfines, il est nécessaire, d'après l'art antérieur, de se placer dans une zone comprise entre 2 et 12 (US 4,324,940 - US 4,487,985 - US 4,513,156). Les zéolites sélectionnées sont alors principalement les suivantes : ZSM 5, ZSM 11, ZSM 23, ZSM 37. Ces zéolites sont caractérisées essentiellement par des pores d'ouvertures à 10 oxygènes. Effectivement, les zéolites plus ouvertes (pores d'ouvertures à 12 oxygènes) comme la mordénite, la ZSM 4, la zéolite Y, la zéolite beta, ont des CI très faibles (<< 1) (US 4,324,940). Ainsi, il apparaît, d'après l'art antérieur, que des ouvertures à 10 oxygènes s'avèreraient nécessaires pour la réaction d'oligomérisation des oléfines, excluant les zéolites plus ouvertes comme la mordénite. Effectivement, la mordénite forme H standard (zéolon 900 H) conduit à des performances médiocres (M. OCCELLI, J. HSU ET L. GALYA, J. Mol. Catal. 32 (1985), 377).

Le deuxième critère, qui a été défini pour sélectionner les zéolites pouvant être performantes en oligomérisation, est l'indice de transfert d'hydrogène (HTI). Sa définition détaillée est donnée dans le document US 4,417,086. Le HTI est défini comme le rapport des quantités de 3-méthylpentène et de 3-méthylpentane produites à partir du n-hexène pour des conversions comprises entre 30 et 70 %. D'après ce critère, il est nécessaire de ne retenir que les zéolites dont le HTI est supérieur à 10 et de manière préférée à 25 (US 4,417,086 - US 4,414,423 - US 4,417,088). La ZMS5, avec un HTI supérieur à 60, apparaît de nouveau comme un matériau de choix. La mordénite, même désaluminée, avec un HTI de 1 seulement, est à exclure ; en effet, d'après ce critère, elle apparaît même moins performante que les silice-alumines amorphes (US 4,417,088 - US 4,417,086).

Finalement, que l'on retienne l'un ou l'autre des critères de performances CI ou HTI pour la réaction d'oligomérisation des oléfines, la mordénite désaluminée ou non est un matériau ne présentant pas ou très peu d'intérêt.

La mordénite désaluminée, selon une procédure particulière, a toutefois été proposée pour une réaction d'oligomérisation des oléfines très spéciale : l'oligomérisation sélective de l'isobutène dans un mélange d'hydrocarbures contenant d'autres oléfines, en particulier des butènes 1 et 2, ces derniers ne devant pas être transformés (US 4,513,166 - US 4,454,367). Il est bien connu que la transformation de l'isobutène par oligomérisation est une réaction très facile quasi ne nécessitant pas une acidité forte ; elle peut, d'ailleurs, très bien être effectuée sur silice-alumine amorphe, dans des conditions opératoires peu sévères (US 4,268,700 - US 4,324,938 - US 4,392,002 - US 4,423,264 - EP 132172 - FR 2.498.306 - FR 2.495.605 - FR 2.517.668 - FR 2.508.899).

Comme on le verra dans les exemples, une mordénite modifiée, selon une procédure différente de celle de l'invention, peut oligomériser l'isobutène sans nécessairement oligomériser les autres oléfines présentes dans la charge. D'après les documents US 4,513,166 et US 4,454,367, les mordénites désaluminées permettant une transformation sélective de l'isobutène ont des rapports Si/Al aromiques variant entre 25 et 100, une capacité de rétention de pyridine à la température de 300 °C de 0,05 à 0,25 millimole par gramme$^{-1}$, et sont préparées par des cycles calcination sous vapeur d'eau-attaque acide. La calcination est impérativement réalisée à une température supérieure à 600 °C, sous une pression partielle de vapeur d'eau inférieure à 50 %, et l'attaque acide dans une solution de concentration supérieure à 4 N. Il est, par ailleurs, nettement préférable de procéder, après les cycles calcination sous vapeur d'eau (% $H_2O$ 50 %)-attaque acide, à une calcination ultérieure entre 400 et 700 °C, de manière à mieux stabiliser le solide. Les mordénites désaluminées, suivant la procédure ainsi décrite, s'avèrent être de mauvais catalyseurs pour l'oligomérisation des oléfines légères, en vue d'obtenir des bases pour carburants diesel et/ou carburéacteurs. Ceci est probablement dû à deux facteurs : d'une part, leur acidité non optimisée, c'est à dire très faible et, d'autre part, leur organisation cristalline imparfaite. En effet, il est connu que la pyridine est une base trop forte et donc insuffisamment sélective. Elle s'adsorbe sur l'ensemble des sites acides présents dans les zéolites modifiées, qu'ils soient de type Brönsted ou du type Lewis. La mesure de la quantité de pyridine, restant adsorbée à 300 °C sur une zéolite, donne accès à la quantité totale de sites acides présents à la surface du solide, mais ne donne aucune indication précise sur le type de site acide (Brönsted ou Lewis), et sur leur répartition en force. Dans ces conditions, la pyridine ne discrimine pas les sites de force moyenne des sites forts. Par ailleurs, il a été montré que l'attaque acide, qui suit la calcination sous vapeur d'eau d'une zéolite (A. MACEDO, F. RAATZ, R. BOULET, E. FREUND, Ch. MARCILLY, Preprints of Poster Papers, the 7th International zéolite Conference, Tokyo, July 1986), doit être soigneusement optimisée de manière à ce que les aluminiums cationiques susceptibles d'être formés au cours de cette calcination, et qui sont des poisons spécifiques des sites forts de la charpente, soient éliminés. De plus, à rapport Si/Al identique, une zéolite bien cristallisée présente une acidité plus forte que le même solide dont la charpente est moins bien organisée.

De plus, le brevet US 3591488 enseigne un procédé de conversion d'hydrocarbures dans lequel on utilise une mordénite préparée selon une étape de traitement thermique en présence de vapeur d'eau dans des conditions sévères, suivie d'une attaque acide en milieu dilué (0,1N dans l'exemple 4). On a constaté que la mordénite ainsi traitée était peu active en oligomérisation des oléfines.

Le document FR-A-2477903 décrit la préparation d'une mordénite pour une réaction d'isomérisation de C8 aromatique par un traitement acide consistant à traiter la mordénite à une température comprise entre 0 et 100°C par un acide fort de concentration supérieure, de préférence, à 2N suivi d'une neutralisation d'une partie des sites acides par au moins un cation métallique alcalin ou alcalino-terreux.

Enfin, le document US-A-3597155 décrit la préparation d'une mordénite par un traitement acide sans selfsteaming préalable à une température de 20 à 100°C, la concentration de la solution étant de 4 à 12N.

Ce type de traitement induit des taux de cristallinité inférieurs à 75%.

Dans les applications visées par la présente invention, on préfère transformer par oligomérisation l'ensemble des oléfines présentes dans la charge ($C_2$ à $C_8$). Il ne s'agit plus, comme dans l'application précédente (US 4,454,367 - US 4,513,166) d'oligomériser sélectivement l'isobutène. De ce point de vue, il est connu que les vitesses d'oligomérisation des oléfines légères varient dans le sens : V isobutène > V propène > V butène-1 et pentène-1 >> V butènes-2 > V éthylène.

Ainsi, pour transformer l'ensemble des oléfines $C_2$ à $C_8$, il est nécessaire de disposer d'un catalyseur dont l'acidité est forte. On a, dans la présente invention, découvert qu'une zéolite non sélective géométriquement (mauvais indices CI et HTI), c'est à dire d'ouverture de pores à 12 oxygènes : la mordénite forme H, convenablement modifiée, permet de préparer des catalyseurs d'oligomérisation des oléfines légères extrêmement performants, et même meilleurs que ceux préparés à partir de zéolites à ouvertures de pores à 10 oxygènes (indices CI et HTI compris dans les fourchettes préconisées dans l'art antérieur). La procédure particulière de désalumination que l'on a utilisée permet d'aboutir d'une part, à une acidité forte et, d'autre part, à une excellente organisation cristalline.

Les mordénites susceptibles d'être utilisées comme matière de base peuvent être d'origine naturelle ou synthétique. On préférera, cependant, les zéolites synthétiques, car elles peuvent être préparées en phase très pure avec un rapport Si/Al contrôlé, variant généralement entre 5 et 25, et plus spécifiquement entre 5 et 15. Si la mordénite de départ contient des agents structurants organiques, on les éliminera avant tout traitement par une calcination en présence d'oxygène à 550 °C par exemple, ou par toute autre technique connue dans l'art antérieur. Pour aboutir à la forme H désaluminée, il est, dans une première étape, nécessaire d'éliminer les cations non décomposables, généralement $Na^+$, présents dans la mordénite de départ. Pour ce faire, on pourra procéder à un ou des échanges dans des solutions diluées d'acides comme HCl ou dans des solutions de $NH_4^+$. Le point important est, qu'à l'issue de cette première étape que l'on peut qualifier de décationisation, la quasi totalité des cations alcalins soit éliminée (% Na compris entre 150 et 1000 ppm, et de préférence entre 300 et 800 ppm), et que le solide obtenu soit une forme H ou un précurseur de forme H (exemple $NH_4^+$) non désaluminée substantiellement (% de désalumination < 10 % et de préférence < 5 %). De manière préférée, on choisira comme précurseur de forme H, la forme $NH_4^+$ ; en effet, l'échange $Na^+ \rightleftarrows NH_4^+$ ne conduit pas à une désalumination de la charpente. Cette dernière est donc dans une forme $NH_4$ obtenue par échange, normalement exempte de défauts structuraux.

Dans une deuxième étape, la forme H ou le précurseur de forme H, peu ou pas désaluminé, est soumis à un traitement sous vapeur d'eau à une température de 450 à 600 °C et, de préférence, 550 à 600 °C, sous une pression partielle de vapeur d'eau supérieure à 60 % et, de préférence, 85 %. La pression partielle de vapeur d'eau élevée est un critère essentiel de la préparation, car cette pression élevée conduit à des solides dont la charpente, bien que désaluminée, est très bien recristallisée : elle contient peu de défauts. Sans se lier à une théorie particulière, on peut admettre qu'une forte pression partielle de vapeur d'eau facilite la migration de la silice, provenant de zones amorphisées, et sa réinsertion ultérieure dans les lacunes de la charpente laissées vacantes par le départ d'aluminium. A l'issue de cette deuxième étape, on obtient un solide caractérisé par la présence de zones amorphes en faible quantité, qui sont des précurseurs du réseau poreux secondaire, et par une charpente cristalline pratiquement exempte de défauts structuraux. Le présence de zones amorphes, dans les zéolites traitées à haute température sous vapeur d'eau, est un phénomène connu. Cependant, les conditions opératoires préconisées permettent limiter au maximum la proportion de zone amorphe au sein des cristaux. Les taux de cristallinité mesurés par diffraction X sont généralement supérieurs à 80 % et, plus spécifiquement, à 90 %. Les solides calcinés sous vapeur d'eau sont également caractérisés par la présence, dans les micropores structuraux, d'espèces aluminiques extra réseau, une attaque acide ultérieure est donc nécessaire, car ces micropores sont pratiquement bouchés. Cependant, pour obtenir un bon catalyseur d'oligomérisation, cette attaque acide doit être optimisée.

L'attaque acide optimisée constitue la troisième étape de la préparation des catalyseurs. A ce stade, il est important de préserver ou de libérer les sites acides forts des solides. L'attaque acide devra dont être suffisamment forte pour, d'une part, éliminer les aluminiums cationiques formés lors du traitement sous vapeur d'eau, et qui sont des poisons des sites forts, et, d'autre part, pour libérer la microporosité structurale. Les sites acides du type Brönsted liés aux espèces extra réseau étant de force moyenne ou faible, il n'est pas indispensable de procéder à leur totale élimination. L'attaque acide ne devra, cependant, pas être trop forte, de manière à éviter une désalumination trop importante des aluminiums de charpente. La force à retenir pour l'attaque acide dépend étroitement des caractéristiques atteintes après la calcination sous vapeur d'eau et, en particulier, de la maille cristalline.

Les solutions concentrées sont généralement utilisées à une concentration comprise entre 0,5 N et 20 N et de préférence entre 1 et 12 N.

Le $pK_A$ des acides préconisés est habituellement inférieur à 4 et de préférence à -1,5.

Le volume de solution utilisée, exprimé en $cm^3$, sur le poids de solide séché à 100°C exprimé en grammes (V/P) est généralement supérieur à 3 et de préférence compris entre 5 et 10.

La durée du traitement acide est en général supérieur à 10 min et de préférence varie entre 1 et 4 heures.

Pour des rapports Si/Al de charpente variant entre 10 et 40, on utilisera des concentrations de solutions acides (HCl, $H_2SO_4$, $HNO_3$, etc...) comprises entre 0,5 et 5 N et, de préférence, entre 1 et 3 N. Pour des rapports Si/Al de charpente supérieurs, on utilisera des concentrations de solutions acides comprises entre 5 et 20 N et de préférence entre 7 et 12 N (les rapports Si/Al de charpente sont déterminés par spectroscopie infra-rouge pour des rapports compris entre 10 et 40, et par R.M.N. du $^{29}Si$ pour des rapports supérieurs). Il est possible de réaliser, au lieu d'une attaque en milieu concentré, plusieurs attaques en milieu dilué ; les fourchettes de conditions opératoires données ci-dessus illustrent simplement le cas où une seule attaque acide post-calcination est réalisée, sans limiter, pour autant, la portée de l'invention. Par ailleurs, pour atteindre des rapports Si/Al élevés, c'est à dire supérieurs à 40 et plus spécifiquement supérieurs à 60, on pourra recourir avantageusement à plusieurs cycles calcination sous vapeur d'eau-attaque acide optimisée. Il est important que l'attaque acide ne soit pas trop sévère, car il y a, dans ces conditions, désalumination de la charpente sans recristallisation et, donc, formation de lacunes atomiques qui sont des points de fragilisation de la structure.

Les solides préparés selon l'invention ont avantageusement des rapports Si/Al variant entre 10 et 100 et, de préférence, entre 20 et 60 ; ils ont un volume de maille situé entre 2755 $A^3$ et 2730 $A^3$ (1 A = $10^{-10}$ m) et de préférence entre 2745 $A^3$ et 2735 $A^3$, ils ont de préférence une force acide suffisante pour que les Al-OH structuraux interagissent avec une base faible comme l'éthylène (mesure infra-rouge à 77 °K), ou un composé à caractère faiblement acide comme $H_2S$ (mesure infra-rouge à 25 °C). Ces solides doivent, en outre, être de préférence exempts d'espèces cationiques extra réseau que l'on peut détecter par un signal fin (largeur à mi hauteur inférieure à 5 ppm et de préférence inférieure à 2 ppm) situé à 0 ppm (référence Al($H_2O$)$_6^{3+}$) sur un spectre de R.M.N. de 27$_{Al}$, mesuré avec la technique de rotation de l'angle magique.

Les exemples suivants, non limitatifs, illustrent l'invention.


Exemple 1A.

On prépare sept catalyseurs B1, B2, B3, B4, B5, B6 et B7 conformément à l'invention.

La matière première utilisée pour préparer ces divers catalyseurs est une mordénite petits pores de la Société Chimique de la Grande Paroisse, référencée Alite 150 ; sa formule chimique à l'état anhydre est Na,AlO$_2$(SiO$_2$)$_{5,5}$, sa capacité d'adsorption de benzène est de 1 % en poids par rapport au poids de solide sec, et sa teneur en sodium de 5,3 % en poids. Cinq cents grammes de cette poudre sont plongés dans une solution 2 M de nitrate d'ammonium, et la suspension est portée à 95 °C pendant 2 heures. Le volume de la solution de nitrate d'ammonium engagée est égal à 4 fois le poids de zéolite sèche (V/P = 4). Cette opération d'échange cationique est recommencée 3 fois. Après le 3ème échange, le produit est lavé à l'eau à 20 °C pendant 20 minutes, avec un rapport V/P égal à 4. La teneur en sodium exprimée en pourcentage en poids par rapport à la zéolite sèche passe de 5,5 à 0,2 %. Le produit est ensuite filtré, et différents lots sont soumis à une calcination en atmosphère confinée, à une température plus ou moins élevée suivant le degré de désalumination de la charpente que l'on veut obtenir (tableau 1). La durée de la calcination est fixée à 2 heures. La pression partielle de vapeur d'eau à l'intérieur du réacteur est de l'ordre de 90 %. La cristallinité des différents solides, après cette étape de calcination, est supérieure ou égale à 90 %.

On procède ensuite, sur chacun des solides, à une attaque acide avec de l'acide nitrique de concentration d'autant plus élevée que le taux de désalumination de la charpente obtenu, lors de l'étape précédente, est plus important (tableau 1). Au cours de l'attaque acide, le solide est porté à reflux dans la solution d'acide nitrique pendant deux heures, avec rapport V/P égal à 8. Le produit est ensuite filtré, puis lavé abondamment à l'eau distillée.

Les rapports atomiques Si/Al obtenus pour chacun des solides figurent dans le tableau 1.

Chaque solide modifié est ensuite mis en forme par malaxage avec un liant de type aluminique, à raison de 20 % en poids de liant, puis passage au travers d'une filière. Les extrudés obtenus, de diamètre 1,2 mm, sont ensuite séchés et calcinés entre 150 et 500 °C par palier d'une heure environ.

Le catalyseur B7, de rapport Si/Al global = 115, est obtenu en effectuant un second cycle calcination-attaque acide, à une température de 650 °C avec une solution d'acide nitrique 10 N, sur le catalyseur B6.

Tableau 1.

| Catalyseur | B1 | B2 | B3 | B4 | B5 | B6 |
|---|---|---|---|---|---|---|
| Température de calcination (°C) | 500 | 520 | 530 | 550 | 570 | 600 |
| Rapport atomique Si/Al global* | 5,5 | 5,5 | 5,5 | 5,5 | 5,5 | 5,5 |
| Rapport atomique Si/Al IV de charpente | 9 | 16 | 23 | 38 | 57 | 85 |
| Normalité de la solution d'acide nitrique | 1 N | 1,3 N | 2 N | 3 N | 7 N | 10 N |
| Rapport atomique Si/Al global** | 9 | 16 | 23 | 38 | 57 | 86 |

\* après calcination.

\*\* après attaque acide.

Exemple 1B.

On prépare 7 catalyseurs B'1, B'2, B'3, B'4, B'5, B'6 et B'7 conformément à l'invention.

Ces catalyseurs diffèrent de ceux décrits dans l'exemple 1A, en ce que la matière première utilisée pour les préparer n'est plus la mordénite Alite 150 de la Société Chimique de la Grande Paroisse, mais une mordénite larges pores de la Société TOYO-SODA, référencée TSZ 600 NAA. Sa formule chimique, à l'état anhydre, est : $Na,AlO_2(SiO_2)5,1$, et sa teneur en sodium de 5,7 %.

Toutes les étapes d'échange, de calcination, d'attaque acide, de mise en forme et de calcination, sont effectuées dans les mêmes conditions que celles décrites dans l'exemple 1A. Les rapports Si/Al atomiques obtenus ne sont que très légèrement différents (tableau II).

Tableau II.

| Catalyseur | B'1 | B'2 | B'3 | B'4 | B'5 | B'6 |
|-----------|-----|-----|-----|-----|-----|-----|
| Température de calcination (°C) | 500 | 520 | 530 | 550 | 570 | 600 |
| Rapport atomique Si/Al global* | 5,1 | 5,1 | 5,1 | 5,1 | 5,1 | 5,1 |
| Rapport atomique Si/Al IV de charpente | 8 | 14 | 20 | 36 | 55 | 83 |
| Normalité de la solution d'acide nitrique | 1 N | 1,3 N | 2 N | 3 N | 7 N | 10 N |
| Rapport atomique Si/Al global** | 8 | 14 | 20 | 36 | 55 | 83 |

\* après calcination.

\*\* après attaque acide.

Le catalyseur B'7 de rapport Si/Al = 110 est obtenu en effectuant un second cycle, calcination-attaque acide, à une température de 650 °C, avec une solution d'acide nitrique 10 N sur le catalyseur B'6.

Exemple 2A.

Les sept catalyseurs B1, B2, B3, B4, B5, B6 et B7, décrits dans l'exemple 1A, ont été testés en oligomérisation d'une coupe $C_3$ de vapocraquage, en vue d'obtenir un maximum de base pour carburéacteur et carburant diesel.

Les conditions opératoires étaient les suivantes :

– température : 210 °C

– pression : 5,5 MPa

– débit horaire de charge liquide égal à 0,7 fois le volume du catalyseur.

La charge avait la composition pondérale suivante :

|                   |                |
|-------------------|----------------|
| - propane         | : 5,22 %       |
| - propène         | : 94,20 %      |
| - isobutane       | : 0,15 %       |
| - n-butane        | : 0,10 %       |
| - butène-1        | : 0,08 %       |
| - isobutène       | : 0,16 %       |
| - butènes-2       | : 0,08 %       |

$$100$$

A la sortie du réacteur, les produits avaient respectivement les compositions pondérales présentées dans le tableau III.

Tableau III.

| Catalyseurs / Constituants | B1 | B2 | B3 | B4 | B5 | B6 | B7 |
|---|---|---|---|---|---|---|---|
| méthane | - | - | - | - | - | - | - |
| éthane | 0,02 | 0,01 | - | - | - | 0,01 | 0,02 |
| propane | 10,82 | 11,89 | 10,38 | 9,56 | 8,62 | 7,88 | 6,81 |
| propène | 49,27 | 22,70 | 5,18 | 2,07 | 7,25 | 18,27 | 27,41 |
| isobutane | 0,88 | 1,43 | 1,24 | 0,71 | 0,60 | 0,46 | 0,66 |
| n-butane | 0,11 | 0,54 | 0,11 | 0,10 | 0,10 | 0,10 | 0,13 |
| butène-1 | 0,03 | 0,01 | 0,01 | - | 0,01 | 0,01 | 0,01 |
| isobutène | 0,02 | - | - | - | - | - | 0,01 |
| butènes-2 | 0,06 | 0,05 | 0,04 | 0,03 | 0,05 | 0,05 | 0,06 |
| oligomères $C_5^+$ | 38,79 | 63,37 | 83,04 | 87,53 | 83,37 | 73,22 | 64,89 |
| | 100 | 100 | 100 | 100 | 100 | 100 | 100 |

Les différents oligomères $C_5^+$ avaient les caractéristiques présentées sur le tableau IV.

Dans le cadre des catalyseurs préparés selon l'invention, on peut constater qu'il est préférable de travailler avec des mordénites désaluminées ayant un rapport Si/Al compris entre 20 et 60, car :

1) l'activité du catalyseur est plus forte et conduit à des rendements en oligomères $C_5^+$ très élevés (83 à 88 % sur le tableau III).

2) le rendement en coupe diesel > 180 °C est également le plus élevé dans la fourchette préférée, ainsi que les caractéristiques de cette coupe diesel après hydrogénation, en particulier l'indice de cétane.

Tableau IV.

| Catal.<br>Caract. | B1 | B2 | B3 | B4 | B5 | B6 | B7 |
|---|---|---|---|---|---|---|---|
| OLIGOMERE $C_5^+$ GLOBAL | | | | | | | |
| densité 20 °C | 0,785 | 0,790 | 0,797 | 0,803 | 0,799 | 0,787 | 0,772 |
| indice brome | 71 | 68 | 62 | 58 | 60 | 70 | 83 |
| coupe essence PI-180 °C (% pds) | 31 | 28 | 24 | 20 | 23 | 33 | 49 |
| coupe diesel > 180 °C (% pds) | 69 | 72 | 76 | 80 | 77 | 67 | 51 |
| COUPE DIESEL > 180 °C APRES HYDRO-GENATION | | | | | | | |
| indice brome | 0,4 | 0,5 | 0,3 | 0,4 | 0,3 | 0,6 | 0,5 |
| point de trouble (°C) | < - 50 | <-50 | <-50 | <-50 | <- 50 | <-50 | <- 50 |
| point de fumée (coupe 180 - 300 °C) (mm) | 31 | 32 | 33 | 33 | 33 | 33 | 33 |
| indice de cétane | 39 | 41 | 42 | 43 | 43 | 41 | 37 |
| COUPE ESSENCE PI - 180 °C | | | | | | | |
| ind. octane : | | | | | | | |
| RON | 96 | 96 | 96 | 96 | 96 | 96 | 96 |
| MON | 83 | 83 | 83 | 83 | 83 | 83 | 83 |

Exemple 2B.

Les sept catalyseurs B'1, B'2, B'3, B'4, B'5, B'6 et B'7, décrits dans l'exemple 1B ont été testés en oligo-mérisation de la coupe $C_3$ de vapocraquage dont la composition pondérale est donnée dans l'exemple 2A. Les conditions opératoires étaient les mêmes que dans l'exemple 2A.

A la sortie du réacteur, les produits avaient respectivement les compositions pondérales présentées dans le tableau V.

Tableau V.

| Catalyseurs Constituants | B'1 | B'2 | B'3 | B'4 | B'5 | B'6 | B'7 |
|---|---|---|---|---|---|---|---|
| méthane | - | - | - | - | - | - | - |
| éthane | 0,02 | 0,01 | - | - | - | - | 0,02 |
| propane | 10,34 | 11,95 | 10,45 | 9,66 | 8,72 | 7,97 | 6,92 |
| propène | 53,69 | 28,73 | 11,96 | 2,17 | 6,22 | 17,33 | 25,81 |
| isobutane | 0,82 | 1,44 | 1,16 | 0,72 | 0,61 | 0,48 | 0,69 |
| n-butane | 0,11 | 0,54 | 0,18 | 0,10 | 0,10 | 0,10 | 0,13 |
| butène-1 | 0,03 | 0,01 | 0,01 | - | 0,01 | 0,01 | 0,01 |
| isobutène | 0,02 | 0,01 | - | - | - | - | 0,01 |
| butènes-2 | 0,07 | 0,06 | 0,05 | 0,03 | 0,04 | 0,05 | 0,06 |
| oligomères $C_5^+$ | 34,90 | 57,25 | 76,19 | 87,32 | 84,30 | 74,06 | 66,35 |
| | 100 | 100 | 100 | 100 | 100 | 100 | 100 |

Les différents oligomères $C_5^+$ avaient les caractéristiques présentées sur le tableau VI.

Tableau VI.

| Catal. / Caract. | B'1 | B'2 | B'3 | B'4 | B'5 | B'6 | B'7 |
|---|---|---|---|---|---|---|---|
| OLIGOMERE $C_5^+$ GLOBAL | | | | | | | |
| densité 20 °C | 0,784 | 0,788 | 0,794 | 0,803 | 0,800 | 0,789 | 0,775 |
| indice brome | 71 | 69 | 64 | 58 | 59 | 69 | 81 |
| coupe essence PI-180 °C (% pds) | 31 | 29 | 26 | 20 | 22 | 32 | 46 |
| coupe diesel > 180 °C (% pds) | 69 | 71 | 74 | 80 | 78 | 68 | 54 |
| COUPE DIESEL > 180 °C APRES HYDRO-GENATION | | | | | | | |
| indice brome | 0,5 | 0,3 | 0,4 | 0,5 | 0,6 | 0,3 | 0,5 |
| point de trouble (°C) | < - 50 | < - 50 | < - 50 | < - 50 | < - 50 | < - 50 | < - 50 |
| point de fumée (coupe 180 - 300 °C) (mm) | 30 | 32 | 33 | 33 | 33 | 33 | 33 |
| indice de cétane | 39 | 41 | 42 | 43 | 43 | 41 | 38 |
| COUPE ESSENCE PI - 180 °C ind. octane : | | | | | | | |
| RON | 96 | 96 | 96 | 96 | 96 | 96 | 96 |
| MON | 83 | 83 | 83 | 83 | 83 | 83 | 83 |

Comme dans le cas de l'exemple 2A, on peut constater qu'avec les catalyseurs préparés conformément à l'invention, il est préférable de travailler avec des mordénites désaluminées ayant un rapport Si/Al compris entre 20 et 60.

Exemple 2C. (comparatif)

A titre de comparaison, on a préparé trois catalyseurs à base de mordénite, selon la méthode décrite dans les documents US 4,513,166 et US 4,454,367, en opérant avec une pression partielle de vapeur d'eau de 30%, c'est à dire en utilisant une technique différente de celle préconisée par la présente invention.

* Le catalyseur C1 avait un rapport Si/Al = 53 et une capacité de rétention de pyridine égale à 0,07 millimole par g à la température de 300 °C.
* Le catalyseur C2 avait un rapport Si/Al = 97 et une capacité de rétention de pyridine égale à 0,14 millimole par g à la température de 300 °C.
* Le catalyseur C3 avait un rapport Si/Al = 155 et une capacité de rétention de pyridine égale à 0,22 millimole par g à la température de 300 °C.

Ces trois catalyseurs ont été utilisés pour essayer d'oligomériser la coupe $C_3$ de vapocraquage dont la composition est donnée dans l'exemple 2A.

Les conditions opératoires étaient identiques à celles de l'exemple 2A.

A la sortie du réacteur, les produits avaient respectivement les compositions pondérales présentées dans le tableau VII.

Tableau VII.

| Catalyseurs Constituants | C1 | C2 | C3 |
|---|---|---|---|
| méthane | 0,86 | 0,49 | 0,18 |
| éthane | 0,46 | 0,24 | 0,07 |
| propane | 15,17 | 10,89 | 7,28 |
| propène | 73,32 | 78,16 | 83,87 |
| isobutane | 2,44 | 1,46 | 0,63 |
| n-butane | 0,39 | 0,26 | 0,16 |
| butène-1 | 0,01 | 0,01 | 0,02 |
| isobutène | - | - | 0,01 |
| butènes-2 | 0,29 | 0,16 | 0,12 |
| butadiène 1,3 | 0,38 | 0,24 | 0,09 |
| oligomères $C_5^+$ | 6,68 | 8,09 | 7,57 |
| | 100 | 100 | 100 |

On peut constater que ce type de catalyseurs est mal adapté pour l'oligomérisation du propène ; il est, à la fois, peu actif et peu sélectif, il y a formation importante de sous-produits, en particulier du propane, de l'isobutane, du méthane et du butadiène 1,3. En outre, on a pu constater que l'activité de ces catalyseurs diminuait très rapidement du fait de la formation très importante de coke.

Exemple 2D (comparitif)

Préparation d'une forme HM désaluminée non conforme à l'invention.

On utilise comme produit de départ la mordénite à larges pores de la Société TOYO SODA forme Na référence TSZ 600 NAA. La formule chimique de ce solide à l'état anhydre est Na, $AlO_2$ $(SiO_2)_{5,1}$. Ce solide est dans une première étape soumis à trois échanges successifs dans $NH_4NO_3$ 5N à 90°C pendant 2 heures en utilisant des rapports (volume de solution /poids de solide) égaux à 4cm³/g. Après les échanges le produit est lavé, filtré puis séché. Sa teneur en sodium est alors inférieure à 600 ppm.

La forme $NH_4M$ ainsi obtenue est alors soumise à une calcination sous 80 % de vapeur d'eau à 590 °C pendant 4 heures, puis à une attaque acide dans $HNO_3$ dans les conditions suivantes :

| | |
|---|---|
| $HNO_3$ | 0.15 N |
| Durée | 3 heures |
| Volume solution/poids solide | 4 cm³/g |
| Température | 90°C |

A l'issue de cette procédure de désalumination le rapport Si/Al de la forme HM obtenue est égal à 8.0.

La forme HM ainsi préparée est testée en oligomérisation d'une coupe C3 de vapocraquage en vue d'obtenir un maximum de base pour carburateur et carburant diesel.

Les conditions opératoires et la composition de la charge sont celles de l'exemple 2A.

A la sortie du réacteur, les produits avaient respectivement les compositions pondérales suivantes :

| | |
|---|---|
| méthane | - |
| éthane | 0,02 |
| propane | 9,55 |
| propène | 63,13 |
| isobutane | 0,76 |
| n-butane | 0,10 |
| butène-1 | 0,04 |
| isobutène | 0,03 |
| butènes-2 | 0,09 |
| Oligomères C5+ | 26,28 |
| total | 100.00 |

L'oligomère C5$^+$ présentait les caractéristiques suivantes :

1) Oligomère C5$^±$global

| | |
|---|---|
| -densité à 20°C | : 0,778 |
| -indice de brome | : 73 |
| -rendement en coupe essence PI-180°C : % poids | : 38 % |
| -rendement en coupe diesel $\rangle$ 180°C : poids | : 62 % |

2) Coupe diesel > 180°C après hydrogènation

```
-indice de brome                        : 0,4
-point de trouble                       : < -50°C
-point de fumée (coupe 180 - 300°C)     : 28 mm
-indice de cétane                       : 37
```

3) Coupe essence PI - 180°C

    - indices d'octane

RON  : 96

MON  : 83

    Ce catalyseur préparé selon des conditions d'attaque acide non conforme à l'invention est donc peu actif.

Exemple 3A.

    Les catalyseurs B3, B4 et B5 de l'exemple 1A ont été utilisés pour oligomériser une coupe $C_4$ de vapocraquage, en vue d'obtenir un maximum de base pour carburéacteur et carburant diesel.

    Cette charge avait la composition pondérale suivante :

- propène       : 0,06 %
- isobutane    : 1,57 %
- n-butane     : 8,92 %
- butène-1     : 24,36 %
- isobutène    : 43,55 %
- butènes-2    : 21,48 %
- butadiène 1,3 : 0,06 %

    Les conditions opératoires étaient les suivantes :

– température : 230 °C

– pression : 5,5 MPa

– débit horaire de charge liquide égal à 0,7 fois le volume du catalyseur

    A la sortie du réacteur, les produits avaient respectivement les compositions pondérales présentées dans le tableau VIII.

Tableau VIII.

| Catalyseurs<br>Constituants | B3 | B4 | B6 |
|---|---|---|---|
| méthane | - | - | - |
| éthane | - | - | - |
| propane | 0,16 | 0,17 | 0,12 |
| propène | 0,08 | 0,09 | 0,06 |
| isobutane | 5,26 | 4,89 | 4,36 |
| n-butane | 13,92 | 13,43 | 12,70 |
| butène-1 | 0,97 | 0,29 | 1,44 |
| isobutène | 0,61 | 0,50 | 0,69 |
| butènes-2 | 5,97 | 3,44 | 8,81 |
| butadiène 1,3 | - | - | - |
| oligomères $C_5^+$ | 73,03 | 77,19 | 71,82 |
| | 100 | 100 | 100 |

Les différents oligomères $C_5^+$ avaient les caractéristiques présentées sur le tableau IX.

Tableau IX.

| Catal. Caract. | B3 | B4 | B5 |
|---|---|---|---|
| OLIGOMERE $C_5^+$ GLOBAL | | | |
| densité 20 °C | 0,780 | 0,786 | 0,782 |
| indice brome | 68 | 65 | 66 |
| coupe essence PI-180 °C (% pds) | 34,5 | 30 | 33 |
| coupe diesel > 180 °C (% pds) | 65,5 | 70 | 67 |
| COUPE DIESEL > 180 °C APRES HYDRO-GENATION | | | |
| indice brome | 0,6 | 0,4 | 0,4 |
| point de trouble (°C) | < - 50 | < - 50 | < - 50 |
| point de fumée (coupe 180 - 300 °C) (mm) | 31 | 31 | 31 |
| indice de cétane | 30 | 31 | 31 |
| COUPE ESSENCE PI - 180 °C ind. octane : | | | |
| RON | 99 | 98 | 99 |
| MON | 85 | 84 | 85 |

Exemple 3B.

A titre de comparaison, les catalyseurs C1, C2 et C3 de l'exemple 2C ont été utilisés pour essayer d'oligomériser la coupe $C_4$ de vapocraquage dont la composition est donnée dans l'exemple 3A.

Les conditions opératoires étaient identiques à celles de l'exemple 3A.

A la sortie du réacteur, les produits avaient respectivement les compositions pondérales présentées dans le tableau X.

Tableau X.

| Catalyseurs<br>Constituants | C1 | C2 | C3 |
|---|---|---|---|
| méthane | 1,44 | 1,04 | 0,78 |
| éthane | 0,56 | 0,41 | 0,30 |
| propane | 4,69 | 3,44 | 2,52 |
| propène | 0,04 | 0,05 | 0,05 |
| isobutane | 8,86 | 6,91 | 5,48 |
| n-butane | 19,73 | 16,78 | 14,65 |
| butène-1 | 18,27 | 19,07 | 20,93 |
| isobutène | 0,44 | 0,87 | 1,74 |
| butènes-2 | 24,45 | 24,39 | 23,40 |
| butadiène 1,3 | 1,11 | 0,81 | 0,61 |
| oligomères $C_5^+$ | 20,41 | 26,23 | 29,54 |
| | 100 | 100 | 100 |

On peut constater que si ce type de catalyseur est convenable pour l'oligomérisation de l'isobutène, ce qui est une réaction facile, il est mal adapté pour l'oligomérisation des n-butènes qui sont très peu transformés. De plus, ces catalyseurs sont peu sélectifs, car il y a formation importante de sous-produits, en particulier du n-butane, de l'isobutane, du propane, du méthane et du butadiène 1,3. En outre, comme dans le cas de l'exemple 2B, on constate une désactivation très rapide du catalyseur du fait de la formation de coke.

Exemple 4.

Le catalyseur B4 de l'exemple 1A a été utilisé pour oligomériser une coupe $C_2$ de craquage catalytique, en vue d'obtenir un maximum de base pour carburéacteur et carburant diesel.

Cette charge avait la composition pondérale suivante :
- éthane : 4,29 %
- éthylène : 93,55 %
- propane : 1,36 %
- propane : 0,80 %

Les conditions opératoires étaient les suivantes :
– température : 280 °C
– pression : 5,5 MPa

– débit horaire de charge (ramenée à l'état liquide) égal à 0,5 fois le volume du catalyseur

A la sortie du réacteur, les produits avaient la composition pondérale suivante :

| | | |
|---|---|---|
| – méthane | : | 0,11 % |
| – éthane | : | 6,83 % |
| – éthylène | : | 5,89 % |
| – propane | : | 2,26 % |
| – propène | : | 0,41 % |
| – isobutane | : | 2,86 % |
| – n-butane | : | 0,27 % |
| – oligomères $C_5^+$ | : | 81,37 % |

$$\overline{100}$$

L'oligomère $C_5^+$ présentait les caractéristiques suivantes :
- indice de brome : 59
- densité à 20 °C : 0,801
- courbe de distillation TBP
PI (°C) : 38
50 % vol. : 211
PF (°C) : 476

Cet oligomère a été, ensuite, fractionné dans une colonne à distiller de 40 plateaux théoriques avec un taux de reflux de 5/1.

* La coupe essence PI - 180 °C, qui représentait 43 % en poids de l'oligomère total, avait un indice d'octane research clear (RON) égal à 91.

* La coupe lourde > 180 °C, qui représentait 57 % en poids de l'oligomère global, a ensuite été hydrogénée en présence d'un catalyseur à base de palladium déposé sur alumine ; après hydrogénation, le produit présentait les caractéristiques ci-après.
- indice de brome : 0,4
- point de trouble : < - 50 °C
- point de fumée : 34 mm (coupe 180 - 300 °C)
- indice de cétane : 41

Exemple 5.

Le catalyseur B4 de l'exemple 1A a été utilisé pour oligomériser une coupe C3 de craquage catalytique, en vue d'obtenir des bases pour carburéacteur et carburant diesel.

Cette charge avait la composition pondérale suivante :
- éthane : 0,18 %
- éthylène : 0,13 %
- propane : 23,75 %
- propène : 71,25 %
- isobutane : 3,10 %
- n-butane : 0,77 %
- butène-1 : 0,27 %
- isobutène : 0,55 %

Les conditions opératoires étaient les suivantes :
– température : 220 °C
– pression : 5,5 MPa
– débit horaire de charge liquide égal à 0,7 fois le volume du catalyseur

A la sortie du réacteur, les produits avaient la composition pondérale suivante :

| | | |
|---|---|---|
| - éthane | : | 0,18 % |
| - éthylène | : | 0,07 % |
| - propane | : | 27,05 % |
| - propène | : | 1,99 % |
| - isobutane | : | 3,52 % |
| - n-butane | : | 0,77 % |
| - butène-1 | : | 0,01 % |
| - isobutène | : | - |
| - oligomères $C_5^+$ | : | 66,41 % |

_____

100

L'oligomère $C_5^+$ présentait les caractéristiques suivantes :
- indice de brome : 57
- densité à 20 °C : 0,804
- courbe de distillation TBP
PI (°C) : 75
50 % vol. : 259
PF (°C) : 494

Cet oligomère a été, ensuite, fractionné dans une colonne à distiller de 40 plateaux théoriques, avec un taux de reflux de 5/1.

* La coupe essence PI - 180 °C, qui représentait 20 % en poids de l'oligomère total, avait un indice d'octane research clear (RON) égal à 96, et un indice d'octane motor clear (MON) égal à 83.

* La coupe > 180 °C, qui représentait 80 % en poids de l'oligomère global, a ensuite été hydrogénée en présence d'un catalyseur à base de palladium déposé sur alumine ; après hydrogénation, le produit présentait les caractéristiques ci-après.
- indice de brome : 0,4
- point de trouble : < - 50 °C
- point de fumée : 33 mm (coupe 180 - 300 °C)
- indice de cétane : 43

Exemple 6.

Le catalyseur B4 de l'exemple 1A a été utilisé pour oligomériser une coupe $C_4$ de craquage catalytique, en vue d'obtenir des bases pour carburéacteur et carburant diesel.

Cette charge avait la composition pondérale suivante :

| | | |
|---|---|---|
| - propane | : | 0,14 % |
| - propène | : | 0,37 % |
| - isobutane | : | 34,75 % |
| - n-butane | : | 11,93 % |
| - butène-1 | : | 9,99 % |
| - isobutène | : | 15,96 % |
| - butènes-2 | : | 26,86 % |

_____

100

19

Les conditions opératoires étaient les suivantes :
– température : 240 °C
– pression : 5,5 MPa
– débit horaire de charge liquide égal à 0,7 fois le volume du catalyseur
A la sortie du réacteur, les produits avaient la composition pondérale suivante :

| | | |
|---|---|---|
| - propane | : | 0,24 % |
| - propène | : | 0,05 % |
| - isobutane | : | 36,64 % |
| - n-butane | : | 14,50 % |
| - butène-1 | : | 0,12 % |
| - isobutène | : | 0,22 % |
| - butènes-2 | : | 4,30 % |
| - oligomères $C_5^+$ | : | 43,93 % |
| | | 100 |

L'oligomère $C_5^+$ présentait les caractéristiques suivantes :
- indice de brome : 64
- densité à 20 °C : 0,787
- courbe de distillation TBP
PI (°C) : 79
50 % vol. : 199
PF (°C) : 427

L'oligomère a, ensuite, été fractionné dans une colonne à distiller de 40 plateaux théoriques, avec un taux de reflux de 5/1.

* La coupe essence PI - 180 °C, qui représentait 31 % en poids de l'oligomère total, avait un indice d'octane research clear (RON) égal à 97,5 et un indice d'octane motor clear (MON) égal à 84.

* La fraction lourde > 180 °C, qui représentait 69 % en poids de l'oligomère global, a ensuite été hydrogénée en présence d'un catalyseur à base de palladium déposé sur alumine ; après hydrogénation, le produit présentait les caractéristiques ci-après.
- indice de brome : 0,3
- point de trouble : < - 50 °C
- point de fumée : 31 mm (coupe 180 - 300 °C)
- indice de cétane : 35

Exemple 7.

Le catalyseur B4 de l'exemple 1A a été utilisé pour oligomériser une coupe $C_3$ - $C_4$ de craquage catalytique, en vue d'obtenir des bases pour carburéacteur et carburant diesel.
Cette charge avait la composition pondérale suivante :

| - propane | : | 8,3 % |
|---|---|---|
| - propène | : | 25 % |
| - isobutane | : | 23,3 % |
| - n-butane | : | 8 % |
| - butène-1 | : | 6,7 % |
| - isobutène | : | 10,7 % |
| - butènes-2 | : | 18 % |

100

Les conditions opératoires étaient les suivantes :
– température : 225 °C
– pression : 5,5 MPa
– débit horaire de charge liquide égal à 0,7 fois le volume de catalyseur
A la sortie du réacteur, les produits avaient la composition pondérale ci-après.

| - propane | : | 9,42 % |
|---|---|---|
| - propène | : | 0,70 % |
| - isobutane | : | 24,64 % |
| - n-butane | : | 9,84 % |
| - butène-1 | : | 0,15 % |
| - isobutène | : | 0,26 % |
| - butènes-2 | : | 3,42 % |
| - oligomères $C_5^+$ | : | 51,57 % |

100

L'oligomère $C_5^+$ présentait les caractéristiques suivantes :
- indice de brome : 61
- densité à 20 °C : 0,794
- courbe de distillation TBP
PI (°C) : 77
50 % vol. : 225
PF (°C) : 456

L'oligomère a, ensuite, été fractionné dans une colonne à distiller de 40 plateaux théoriques, avec un taux de reflux de 5/1.

* La coupe essence PI - 180 °C, qui représentait 25,5 % en poids de l'oligomère total, avait un indice d'octane research clear (RON) égal à 96 et un indice d'octane motor clear (MON) égal à 83.

* La fraction lourde > 180 °C, qui représentait 74,5 % en poids de l'oligomère global, a ensuite été hydrogénée en présence d'un catalyseur à base de palladium déposé sur alumine ; après hydrogénation, le produit présentait les caractéristiques ci-après.
- indice de brome : 0,4
- point de trouble : < - 50 °C
- point de fumée : 32 mm (coupe 180 - 300 °C)
- indice de cétane : 39

Exemple 8.

Le catalyseur B4 de l'exemple 1A a été utilisé pour oligomériser une coupe légère $C_5$ - 105 °C issue de la

21

synthèse Fischer et Tropsch, en vue d'obtenir des bases pour carburéacteur et carburant diesel.
Cette charge avait la composition pondérale suivante :

```
- propane          :       0,10 %
- isobutane
  + n-butane       :       0,30 %
- butène-1
  + butènes-2      :       1,20 %
- pentanes         :       3,40 %
- pentènes         :      19,30 %
- hexanes          :       5,20 %
- hexènes          :      30,8 %
- heptanes         :       3,6 %
- heptènes         :      27,5 %
- octanes          :       0,9 %
- octènes          :       7,3 %
- benzène          :       0,4 %
                          _____
                           100
```

Les conditions opératoires étaient les suivantes :
– température : 235 °C
– pression : 5,5 MPa
– débit horaire de charge liquide égal à 0,7 fois le volume du catalyseur
A la sortie du réacteur, les produits avaient la composition pondérale suivante :

```
- propane          :       0,10 %
- isobutane
  + n-butane       :       0,38 %
- butènes-2        :       0,01 %
- pentanes         :       4,37 %
- pentènes         :       0,19 %
- hexanes          :       6,65 %
- hexènes          :       1,54 %
- heptanes         :       4,81 %
- heptènes         :       2,75 %
- octanes          :       1,22 %
- octènes          :       1,09 %
- benzène          :       0,40 %
- oligomères C_9^+ :      76,49 %
                          _____
                           100
```

Après stabilisation du produit pour éliminer le propane et les butanes, la partie $C_5^+$ a été fractionnée dans une colonne à distiller de 40 plateaux théoriques avec un taux de reflux égal à 5/1.

* La coupe essence PI - 180 °C, qui représentait 27 % en poids de la fraction $C_5^+$ globale, avait un indice d'octane research clear (RON) égal à 78 et un indice d'octane motor clear (MON) égal à 74.

* La coupe lourde > 180 °C, qui représentait 73 % en poids de la fraction $C_5^+$ totale, a été hydrogénée en présence d'un catalyseur à base de palladium déposé sur alumine ; après hydrogénation, le produit présentait les caractéristiques suivantes :

- indice de brome          : 0,5
- point de trouble         : < - 50°C
- point de fumée           : 33 mm (coupe 180 - 300 °C)
- indice de cétane         : 46

Exemple 9.

Le catalyseur B3 de l'exemple 1A a été utilisé pour oligomériser une coupe oléfinique provenant de la décomposition du méthanol, en vue d'obtenir des bases pour carburéacteur et carburant diesel.

Cette charge avait la composition pondérale suivante :

- diméthyléther        :        0,16 %
- méthane              :        5,30 %
- éthane               :        0,32 %
- éthylène             :        9,71 %
- propane              :        1,46 %
- propène              :       54,60 %
- isobutane            :        1,64 %
- n-butane             :        0,41 %
- butène-1             :        3,82 %
- isobutène            :        5,91 %
- butènes-2            :        9,58 %
- pentènes             :        5,12 %
- hexènes              :        1,97 %

                                ───────
                                100

Les conditions opératoires étaient les suivantes :
– température : 210 °C
– pression : 5,5 MPa
– débit horaire de charge liquide égal à 0,7 fois le volume du catalyseur
A la sortie du réacteur, le produit avait la composition pondérale suivante :

| | | |
|---|---|---|
| – diméthyléther | : | 0,13 % |
| – méthane | : | 5,30 % |
| – éthane | : | 0,41 % |
| – éthylène | : | 7,19 % |
| – propane | : | 4,50 % |
| – propène | : | 3,05 % |
| – isobutane | : | 2,59 % |
| – n-butane | : | 1,02 % |
| – butène-1 | : | 0,25 % |
| – isobutène | : | 0,09 % |
| – butènes-2 | : | 5,25 % |
| – oligomères $C_5^+$ | : | 70,22 % |

100

Après stabilisation du produit pour éliminer le diméthyléther, le méthane, l'éthane, l'éthylène, le propane, le propène, l'isobutane, le n-butane, le butène-1, l'isobutène et les butènes-2, la partie $C_5^+$ a été fractionnée dans une colonne à distiller de 40 plateaux théoriques avec un taux de reflux égal à 5/1.

* La coupe essence PI - 180 °C, qui représentait 24 % en poids de la fraction $C_5^+$ globale, avait un indice d'octane research clear (RON) égal à 97 et un indice d'octane motor clear (MON) égal à 84.

* La coupe lourde > 180 °C, qui représentait 76 % en poids de la fraction $C_5^+$ totale, a été hydrogénée en présence d'un catalyseur à base de palladium déposé sur alumine ; après hydrogénation, le produit présentait les caractéristiques suivantes :
- indice de brome : 0,5
- point de trouble : < - 50 °C
- point de fumée : 33 mm (coupe 180 - 300 °C)
- indice de cétane : 42

## Revendications

1. Procédé de production d'oligomères, dans lequel on met au moins une mono-oléfine ayant de 2 à 8 atomes de carbone au contact d'une mordénite caractérisé en ce que la mordénite a été obtenue par la suite d'opérations suivantes :

a) on soumet la mordénite non désaluminée substantiellement sous forme H ou $NH_4^+$ à au moins un traitement par la vapeur d'eau à une température de 450 à 600°C sous urne pression partielle de vapeur d'eau supérieure à 60 %, et

b) on traite le produit résultant, au moins une fois, par un acide, de concentration comprise entre 0,5 et 20N.

2. Procédés selon la revendication 1, dans lequel on traite une coupe oléfinique $C_3$ ou $C_4$.

3. Procédé selon la revendication 1 ou 2, dans lequel on renouvelle au moins une fois la suite d'opérations a et b.

4. Procédé selon l'rune des revendications 1 à 3, dans lequel la mordénite sous forme H ou $NH_4^+$ provient d'un échange ionique d'une mordénite sodique de rapport atomique Si/Al de 5 à 15 et dans lequel les étapes a et b sont réalisées ou renouvelées jusqu'à obtenir dans le produit fini un rapport atomique Si/Al de 20 à 60 et un volume de maille entre 2755 A³ et 2730 A³ (1 A = 10$^{-10}$m).

5. Procédé selon l'une des revendications 1 à 4, dans lequel le traitement par la vapeur d'eau est effectué à 550 - 600 °C sous une pression partielle de vapeur d'eau supérieure à 85 %.

6. Procédé selon l'une des revendications 1 à 5 dans lequel ledit acide est au moins un acide choisi dans le groupe constitué par l'acide chlorhydrique, l'acide sulfurique et l'acide nitrique.

7. Procédé selon l'une des revendication 1 à 6 dans lequel lesdit acides ont une valeur de $pK_A$ inférieur à 4.

8. Procédé selon l'une des revendications 1 à 7, dans lequel ledit traitement acide est réalisé avec un rapport de volume de solution exprimé en $cm^3$ sur le poids de solide séché à 100°C exprimé en gramme (V/P) supérieur a 3.

9. Procédé selon l'une des revendications 1 à 8 dans lequel la concentrration en acide est de 0,5 à 5N lorsque le rapport atomique Si/Al du produit de l'étape a) est de 10 à 40 et de 5 à 20N lorsque ledit rapport est supérieur à 40.

10. Procédé de préparation d'urne mordénite caractérisé par les étapes suivantes :

a) on soumet la mordénite non désaluminée substantiellement sous forme H ou $NH_4^+$ à au moins un traitement pari la vapeur d'eau à une température de 450 à 600°C sous une pression partielle de vapeur d'eau supérieure à 60 %, et

b) on traite le produit résultant, au moins une fois, par un acide, de concentration comprise entre 0,5 et 20N.

## Patentansprüche

1. Verfahren zur Herstellung von Oligomeren, bei dem man mindestens ein Monoolefin mit 2 bis 8 Kohlenstoffatomen mit einem Mordenit in Kontakt bringt, dadurch gekennzeichnet, daß der Mordenit durch eine Aufeinanderfolge der folgenden Arbeitsgänge erhalten wurde:

(a) man unterwirft den nicht-desaluminierten Mordenit, der im wesentlichen in der H- oder -$NH_4^+$-Form vorliegt, mindestens einer Behandlung mit Wasserdampf bei einer Temperatur von 450 bis 600°C unter einem Wasserdampf-Partialdruck von mehr als 60 % und

(b) man behandelt das resultierende Produkt mindestens einmal mit einer Säure einer Konzentration zwischen 0,5 und 20 N.

2. Verfahren nach Anspruch 1, bei dem man eine $C_3$- oder $C_4$-olefinfraktion behandelt.

3. Verfahren nach Anspruch 1 oder 2, bei dem man die Aufeinanderfolge der Arbeitsgänge (a) und (b) mindestens einmal wiederholt.

4. Verfahren nach einem der Ansprüche 1 bis 3, bei dem der Mordenit in der H- oder $NH_4^+$-Form aus einem Ionenaustausch eines Natrium-Mordenits mit einem Atomverhältnis Si/Al von 5 bis 15 stammt und bei dem die Stufen (a) und (b) durchgeführt oder wiederholt werden, bis in dem Endprodukt ein Atomverhältnis Si/Al von 20 bis 60 und ein Gittervolumen zwischen 2 755 $A^3$ und 2 730 $A^3$ (1 Å = $10^{-10}$ m) erreicht sind.

5. Verfahren nach einem der Ansprüche 1 bis 4, bei dem die Behandlung mit Wasserdampf bei 550 bis 600°C unter einem Wasserdampf-Partialdruck von mehr als 85 % durchgeführt wird.

6. Verfahren nach einem der Ansprüche 1 bis 5, bei dem die Säure mindestens eine Säure ist, die ausgewählt wird aus der Gruppe, die besteht aus Chlorwasserstoffsäure, Schwefelsäure und Salpetersäure.

7. Verfahren nach einem der Ansprüche 1 bis 6, bei dem die Säuren einen $pK_A$-Wert von weniger als 4 haben.

8. Verfahren nach einem der Ansprüche 1 bis 7, bei dem die Säurebehandlung mit einem Verhältnis zwischen dem Volumen der Lösung in $cm^3$ und dem Gewicht des bei 100°C getrockneten Feststoffes in g (V/G) von mehr als 3 durchgeführt wird.

9. Verfahren nach einem der Ansprüche 1 bis 8, bei dem die Säurekonzentration 0,5 bis 5 N beträgt, wenn das Atomverhältnis Si/Al des Produkts der Stufe (a) 10 bis 40 beträgt, und die Säurekonzentration 5 bis 20 N beträgt, wenn das genannte Verhältnis mehr als 40 beträgt.

10. Verfahren zur Herstellung eines Mordenits, gekennzeichnet durch die folgenden Stufen:

(a) man unterwirft den nicht-desaluminierten Mordenit, der im wesentlichen in der H- oder $NH_4^+$-Form vorliegt, mindestens einer Behandlung mit Wasserdampf bei einer Temperatur von 450 bis 600°C unter einem Wasserdampf-Partialdruck von mehr als 60 % und

(b) man behandelt das resultierende Produkt mindestens einmal mit einer Säure einer konzentration zwischen 0,5 und 20 N.

## Claims

1. Method for producing oligomers, in which at least one mono-olefin having 2 to 8 carbon atoms is placed in contact with a mordenite which has been obtained by the following series of operations:

a) subjecting non-dealuminized mordenite substantially in the H or $NH_4^+$ form to at least one treatment with steam at a temperature from 450°C to 600°C at a partial steam pressure above 60%, and

b) treating the resulting product, at least once, with an acid, at a concentration comprised between 0.5 and 20N.

2. Method according to claim 1, wherein a $C_3$ or $C_4$ olefin cut is treated.

3. Method according to claim 1 or 2, wherein the sequence of operations a) and b) is renewed at least once.

4. Method according to any one of claims 1 to 3, wherein the mordenite in H or $NH_4+$ form is derived from ionic exchange of a sodium mordenite of atomic ratio Si/Al of 5 to 15 and wherein steps a) and b) are performed or renewed until there is obtained in the final product an atomic ratio Si/Al of 20 to 60 and a mesh volume between 2755 $A^3$ and 2730 $A^3$ (1 A = $10^{-10}$m).

5. Method according to any one of claims 1 to 4, wherein the steam treatment is carried out at 550-600°C at a partial steam pressure above 85%.

6. Method according to any one of claims 1 to 5, wherein said acid is at least one acid selected from the group constituted by hydrochloric acid, sulfuric acid and nitric acid.

7. Method according to any one of claims 1 to 6, wherein said acids have a $pK_A$ value below 4.

8. Method according to any one of claims 1 to 7, wherein said acid treatment is performed with a volume ratio of solution expressed in $cm^3$ to the weight of dry solid at 100°C expressed as grams (V/P) higher than 3.

9. Method according to any one of claims 1 to 9, wherein the concentration of the acid is comprised between 0.5 and 5 N, when the atomic ratio Si/Al of the product of step a) varies between 10 and 40 and wherein said concentration is comprised between 5 and 20 N, when said ratio is higher than 40.

10. Method of preparation of a mordenite characterized by the following steps :

a) subjecting non-dealuminized mordenite substantially in the H or $NH_4+$ form to at least one treatment with steam at a temperature from 450°C to 600°c at a partial steam pressure above 60%, and

b) treating the resulting product, at least once, with an acid, at a concentration comprised between 0.5 and 20N.